# EUROPEAN PATENT APPLICATION

(11) **EP 4 458 632 A1**
(43) Date of publication of application: **06.11.2024**
(21) Application number: 22914384.7
(22) Date of filing: 20.12.2022
(51) Int. Cl.: B60W 30/182, B60W 50/08

(54) **DRIVING MODE SWITCHING METHOD AND DEVICE, AND VEHICLE**

(30) Priority: 28.12.2021 CN 202111626934
(71) Applicant: Great Wall Motor Company Limited, Baoding, Hebei 071000 (CN)
(72) Inventor: LIAN, Zhiyuan, Baoding, Hebei 071000 (CN)
(74) Representative: Klunker IP Patentanwälte PartG mbB
(86) International application number: PCT/CN2022/140241
(87) International publication number: WO 2023/125130

(57) **Abstract**

The present application relates to the technical field of vehicles, and provides a method and apparatus for switching driving modes and a vehicle. The method for switching driving modes includes: acquiring a current operation condition of a vehicle, wherein the current operation condition includes the following operation-condition parameters: a current driving mode, a residual capacity of a battery, and a travelling speed of the vehicle or an opening degree of an accelerator pedal; according to the current operation condition and operation-condition-parameter thresholds, determining a target driving mode of the vehicle, wherein the operation-condition-parameter thresholds include a residual-capacity threshold, travelling-speed thresholds and accelerator-pedal-opening-degree thresholds; and in response to a driving-mode switching instruction inputted by a user based on the target driving mode, switching the driving mode of the vehicle to the target driving mode. The method for switching driving modes according to the present application can determine the suitable driving mode according to the current operation condition of the vehicle for the user to switch, thereby realizing automatic regulation of the driving modes and not requiring manual regulation by the driver, which can improve the safety of the vehicle driving.

## Description

The present patent application claims the priority of the Chinese patent application filed on December 28th 2021 with the application number of No. CN 202111626934.2. The disclosure of the earlier application is incorporated herein in its entirety by reference.

### TECHNICAL FIELD

The present application relates to the technical field of vehicles, and particularly relates to a method and apparatus for switching driving modes and a vehicle.

### BACKGROUND

The driving mode of a vehicle may be freely selected by the driver. However, during the travelling of a vehicle, the optimum driving mode that is suitable for the current operation condition is not constant. When the driving mode is selected freely by the driver, if the driver does not switch the driving mode, the driving comfortableness may be highly deteriorated. If the driver manually adjusts the driving mode, a series of circumstances that are adverse to safe driving might happen, for example, distraction of the attention of the driver, leaving from the front of the sight lines, and one-handed operation of the steering wheel, which results in a huge potential safety hazard.

### SUMMARY

### TECHNICAL PROBLEM

The present application provides a method and apparatus for switching driving modes and a vehicle, which can automatically determine the suitable driving mode according to the current operation condition of the vehicle, for the user to select whether to switch the driving mode.

### SOLUTIONS TO THE PROBLEM

### SOLUTIONS

In the first aspect, the present application provides a method for switching driving modes, wherein the method comprises the steps of:
acquiring a current operation condition of a vehicle, wherein the current operation condition comprises the following operation-condition parameters: a current driving mode, a residual capacity of a battery, and a travelling speed of the vehicle or an opening degree of an accelerator pedal;
according to the current operation condition and operation-condition-parameter thresholds, determining a target driving mode of the vehicle, wherein the operation-condition-parameter thresholds include a residual-capacity threshold, travelling-speed thresholds and accelerator-pedal-opening-degree thresholds; and
in response to a driving-mode switching instruction inputted by a user based on the target driving mode, switching the driving mode of the vehicle to the target driving mode.

In an alternative implementation, the step of, according to the current operation condition and the operation-condition-parameter thresholds, determining the target driving mode of the vehicle comprises:
when the current driving mode is a sport mode, if the current operation condition satisfies a first operation-condition situation, determining the target driving mode to be an energy saving mode;
wherein the first operation-condition situation comprises that the residual capacity is less than a first electric-quantity threshold and a first requesting signal is not detected, wherein the first requesting signal is for instructing to switch the driving mode of the vehicle from the sport mode to a standard mode.

In an alternative implementation, the step of, according to the current operation condition, determining the target driving mode of the vehicle further comprises:
if the current operation condition satisfies a second operation-condition situation, determining the target driving mode to be the standard mode;
wherein the second operation-condition situation comprises that the residual capacity is less than a second electric-quantity threshold and a second requesting signal is not detected, wherein the second requesting signal is for instructing to switch the driving mode of the vehicle from the sport mode to the energy saving mode, and the second electric-quantity threshold is larger than the first electric-quantity threshold.

In an alternative implementation, the step of, according to the current operation condition, determining the target driving mode of the vehicle comprises:
when the current driving mode is a sport mode, if a duration for which the current operation condition maintains as a third operation-condition situation is larger than or equal to a first preset duration, determining the target driving mode to be an energy saving mode;
wherein the third operation-condition situation comprises that the residual capacity is larger than or equal to a first electric-quantity threshold, the travelling speed of the vehicle is less than a first speed threshold or the opening degree of the accelerator pedal is less than a first opening-degree threshold, and a first requesting signal is not detected, wherein the first requesting signal is for instructing to switch the driving mode of the vehicle from the sport mode to a standard mode.

In an alternative implementation, the step of, according to the current operation condition, determining the target driving mode of the vehicle further comprises:
if a duration for which the current operation condition maintains as a fourth operation-condition situation is larger than or equal to a second preset duration, determining the target driving mode to be the standard mode;
wherein the fourth operation-condition situation comprises that the residual capacity is larger than or equal to a second electric-quantity threshold, the travelling speed of the vehicle is less than a second speed threshold, the opening degree of the accelerator pedal is less than a second opening-degree threshold, and a second requesting signal is not detected, wherein the second requesting signal is for instructing to switch the driving mode of the vehicle from the sport mode to the energy saving mode, the second electric-quantity threshold is larger than the first electric-quantity threshold, the second speed threshold is larger than the first speed threshold, and the second opening-degree threshold is larger than the first opening-degree threshold.

In an alternative implementation, the step of, according to the current operation condition, determining the target driving mode of the vehicle comprises:
when the current driving mode is an energy saving mode, if a duration for which the current operation condition maintains as a fifth operation-condition situation is larger than or equal to a third preset duration, or the current operation condition satisfies the fifth operation-condition situation and a slope of a current travelling road is larger than a first slope threshold, determining the target driving mode to be a sport mode;
wherein the fifth operation-condition situation comprises that the residual capacity is larger than or equal to a second electric-quantity threshold, the travelling speed of the vehicle is larger than or equal to a third speed threshold or the opening degree of the accelerator pedal is larger than or equal to a third opening-degree threshold, and a third requesting signal is not detected, wherein the third requesting signal is for instructing to switch the driving mode of the vehicle from the energy saving mode to a standard mode.

In an alternative implementation, the step of, according to the current operation condition, determining the target driving mode of the vehicle comprises:
when the current driving mode is an energy saving mode, if a duration for which the current operation condition maintains as a sixth operation-condition situation is larger than or equal to a fourth preset duration, or the current operation condition satisfies the sixth operation-condition situation and a slope of a current travelling road is between a second slope threshold and a first slope threshold, determining the target driving mode to be a standard mode;
wherein the sixth operation-condition situation comprises that the residual capacity is larger than or equal to a first electric-quantity threshold, the travelling speed of the vehicle is larger than or equal to a fourth speed threshold or the opening degree of the accelerator pedal is larger than or equal to a fourth opening-degree threshold, and a fourth requesting signal is not detected, wherein the fourth requesting signal is for instructing to switch the driving mode of the vehicle from the energy saving mode to a sport mode.

In an alternative implementation, the step of, according to the current operation condition, determining the target driving mode of the vehicle comprises:
when the current driving mode is a standard mode, if a duration for which the current operation condition maintains as a seventh operation-condition situation is larger than or equal to a fifth preset duration, or the current operation condition satisfies the seventh operation-condition situation and a slope of a current travelling road is larger than or equal to a third slope threshold, or the current operation condition satisfies the seventh operation-condition situation and a stroke speed of the accelerator pedal is larger than or equal to an accelerator-pedal-travel-speed threshold, determining the target driving mode to be a sport mode;
wherein the seventh operation-condition situation comprises that the residual capacity is larger than or equal to a third electric-quantity threshold, the travelling speed of the vehicle is larger than or equal to a fifth speed threshold or the opening degree of the accelerator pedal is larger than or equal to a fifth opening-degree threshold, and a fifth requesting signal is not detected, wherein the fifth requesting signal is for instructing to switch the driving mode of the vehicle from the standard mode to an energy saving mode.

In an alternative implementation, the step of, according to the current operation condition, determining the target driving mode of the vehicle comprises:
when the current driving mode is a standard mode, if the current operation condition satisfies an eighth operation-condition situation, determining the target driving mode to be an energy saving mode;
wherein the eighth operation-condition situation comprises that the residual capacity is less than a fourth electric-quantity threshold and a sixth requesting signal is not detected, wherein the sixth requesting signal is for instructing to switch the driving mode of the vehicle from the standard mode to a sport mode.

In an alternative implementation, the step of, according to the current operation condition, determining the target driving mode of the vehicle comprises:
if a duration for which the current operation condition maintains as a ninth operation-condition situation is larger than or equal to a sixth preset duration, determining the target driving mode to be the energy saving mode;
wherein the ninth operation-condition situation comprises that the residual capacity is larger than or equal to a fourth electric-quantity threshold, the travelling speed of the vehicle is less than a sixth speed threshold or the opening degree of the accelerator pedal is less than a sixth opening-degree threshold, and the sixth requesting signal is not detected, wherein the sixth requesting signal is for instructing to switch the driving mode of the vehicle from the standard mode to the sport mode.

In an alternative implementation, the step of, in response to the driving-mode switching instruction inputted by the user based on the target driving mode, switching the driving mode of the vehicle to the target driving mode comprises:
based on the target driving mode, generating a driving-mode-switching requesting signal;
in response to the driving-mode-switching requesting signal, reporting a driving-mode switching request to the user; and
in response to the driving-mode switching instruction inputted by the user, switching the driving mode of the vehicle to the target driving mode.

In the second aspect, the present application provides an apparatus for switching driving modes, wherein the apparatus comprises:
an acquiring module configured for acquiring a current operation condition of a vehicle, wherein the current operation condition comprises the following operation-condition parameters: a current driving mode, a residual capacity of a battery, and a travelling speed of the vehicle or an opening degree of an accelerator pedal;
a determining module configured for, according to the current operation condition and operation-condition-parameter thresholds, determining a target driving mode of the vehicle, wherein the operation-condition-parameter thresholds include a residual-capacity threshold, travelling-speed thresholds and accelerator-pedal-opening-degree thresholds; and
a responding module configured for, in response to a driving-mode switching instruction inputted by a user based on the target driving mode, switching the driving mode of the vehicle to the target driving mode.

In the third aspect, the present application provides an electronic device, the electronic device comprising a memory, a processor, and a computer program that is stored in the memory and executable in the processor, wherein the processor, when executing the computer program, implements the steps of the method according to the first aspect or any one of the alternative implementations of the first aspect.

In the fourth aspect, the present application provides a vehicle, comprising an electronic device, the electronic device comprising a memory, a processor, and a computer program that is stored in the memory and executable in the processor, wherein the processor, when executing the computer program, implements the steps of the method according to the first aspect or any one of the alternative implementations of the first aspect.

In the fifth aspect, the present application provides a computer-readable storage medium, the computer-readable storage medium storing a computer program, wherein the computer program, when executed by a processor, implements the steps of the method according to the first aspect or any one of the alternative implementations of the first aspect.

In the sixth aspect, the present application provides a computer program product, wherein the computer program product has a program code, and the program code, when executed in a corresponding processor, controller, computing device or electronic device, implements the steps of the method according to the first aspect or any one of the alternative implementations of the first aspect.

### ADVANTAGEOUS EFFECTS OF THE PRESENT DISCLOSURE

### ADVANTAGEOUS EFFECTS

In the method for switching driving modes, the current operation condition of the vehicle can be acquired, wherein the current operation condition comprises the following operation-condition parameters: the current driving mode, the residual capacity of the battery, and the travelling speed of the vehicle or the opening degree of the accelerator pedal. Subsequently, according to the current operation condition, the target driving mode of the vehicle is determined. If the user inputs the driving-mode switching instruction based on the target driving mode, then, in response to the driving-mode switching instruction, the driving mode of the vehicle is switched to the target driving mode. In other words, by using the method for switching driving modes, the vehicle can automatically determine the driving mode corresponding to the current operation condition of the vehicle, and enable the user to select whether to switch the driving mode, thereby realizing automatic regulation of the driving modes and not requiring manual regulation by the driver, which can improve the safety of the vehicle driving.

### BRIEF DESCRIPTION OF THE DRAWINGS

### DESCRIPTION OF THE DRAWINGS

In order to more clearly illustrate the technical solutions of the embodiments of the present application, the figures that are required to describe the embodiments or the prior art will be briefly described below. Apparently, the figures that are described below are embodiments of the present application, and a person skilled in the art can obtain other figures according to these figures without paying creative work.
FIG. 1 is a schematic diagram of an application scene of a method for switching driving modes according to an embodiment of the present application;
FIG. 2 is a schematic flow chart of a method for switching driving modes according to an embodiment of the present application;
FIG. 3 is a schematic structural diagram of an apparatus for switching driving modes according to an embodiment of the present application; and
FIG. 4 is a schematic structural diagram of an electronic device according to an embodiment of the present application.

### EMBODIMENTS

### DETAILED DESCRIPTION

In the following description, in order for description rather than limitation, particular details such as particular system structures and techniques are provided, to facilitate to thoroughly comprehend the embodiments of the present application. However, a person skilled in the art should clearly know that the present application may also be embodied in the embodiments that do not have those particular details. In other cases, the detailed description on the well-known systems, devices, circuits and methods is omitted, to prevent affecting the description on the present application by unnecessary details.

In order to make the objects, the technical solutions and the advantages of the present application clearer, the present application will be described below with reference to the drawings and the particular embodiments.

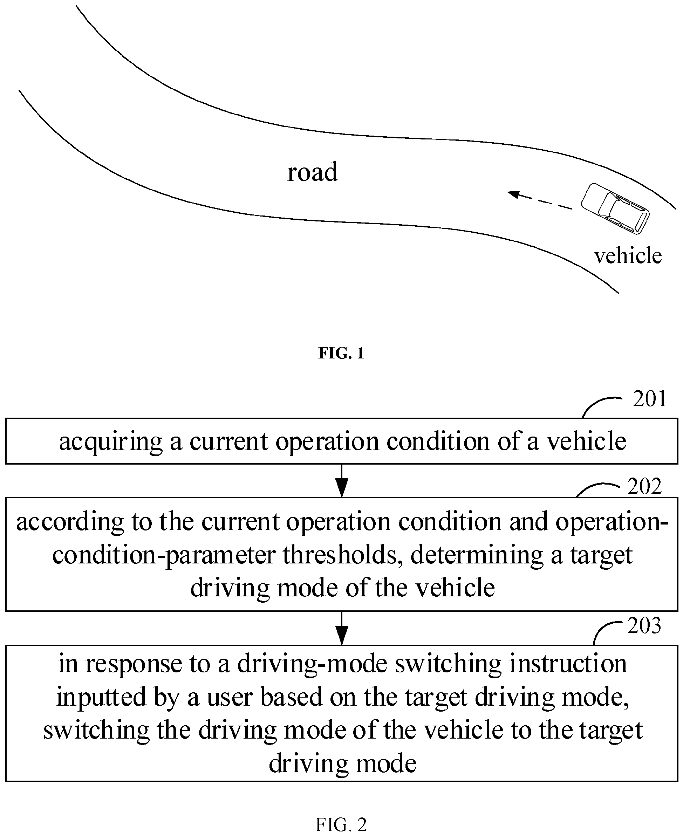

FIG. 1 shows an application scene of a method for switching driving modes according to the present application. Referring to FIG. 1, when a vehicle is travelling in a road, the driver may manually adjust the driving mode of the vehicle, to obtain a good driving experience. However, usually the operation condition of the vehicle varies frequently, and the optimum driving mode corresponding thereto also varies. If the driver manually adjusts the driving mode, a series of circumstances that are adverse to safe driving might happen, for example, distraction of the attention of the driver, leaving from the front of the sight lines, and one-handed operation of the steering wheel, which results in a huge potential safety hazard.

In the method for switching driving modes according to the present application, the operation condition of the vehicle can be acquired, for example, the current driving mode, the residual capacity of the battery, and the travelling speed of the vehicle or the opening degree of the accelerator pedal. Subsequently, the target driving mode that is most suitable for the current operation condition is determined according to the operation condition, for the driver to select whether to switch the driving mode. Subsequently, in response to a driving-mode switching instruction inputted by the driver based on the target driving mode, the driving mode of the vehicle can be switched to the target driving mode, thereby realizing automatic regulation of the driving modes and not requiring manual regulation by the driver, which can improve the safety of the vehicle driving.

As an example, the vehicle may, every a preset duration, acquire the current operation condition of the vehicle and determine the target driving mode corresponding to the current operation condition. Alternatively, the vehicle may determine the target driving mode corresponding to the current operation condition when the residual capacity of the battery, the travelling speed of the vehicle or the opening degree of the accelerator pedal has a predetermined change. Alternatively, the vehicle may determine the target driving mode corresponding to the current operation condition when the slope of the road changes greatly. Alternatively, the vehicle may determine the target driving mode corresponding to the current operation condition when the stroke speed of the accelerator pedal changes greatly. Alternatively, the vehicle may, in response to a relevant instruction by the user, acquire the current operation condition of the vehicle and determine the target driving mode corresponding to the current operation condition.

The method for switching driving modes according to the present application will be described in detail below with reference to the drawings.

Referring to FIG. 2, FIG. 2 shows the process of the implementation of a method for switching driving modes according to an embodiment of the present application, which comprises totally three steps of the step 201 to the step 203. The three steps will be described in detail below.

Step 201: acquiring a current operation condition of a vehicle.

The current operation condition may comprise the following operation-condition parameters: the current driving mode, the residual capacity of the battery, and the travelling speed of the vehicle or the opening degree of the accelerator pedal. The particular means for acquiring the current operation condition is not limited in the present application.

As an example, the vehicle may execute the step 201 once every a preset duration, to acquire the current operation condition of the vehicle, and determine the target driving mode corresponding to the current operation condition. For example, the preset duration may be 10 seconds, 1 minute or any other time period. The preset duration may be set when the vehicle leaves factory, and may also be set during the usage of the vehicle by the user according to demands.

As an example, the vehicle may execute the step 201 in response to an instruction by the user, to acquire the current operation condition of the vehicle, and determine the target driving mode corresponding to the current operation condition. For example, the mode of emitting the user instruction may be that the user speaks a particular content. The particular content may be set when the vehicle leaves factory, and may also be set during the usage of the vehicle by the user according to demands. As an example, the particular content may be "please adjust the driving mode", and so on.

Step 202: according to the current operation condition and operation-condition-parameter thresholds, determining a target driving mode of the vehicle.

The operation-condition-parameter thresholds include a residual-capacity threshold, travelling-speed thresholds and accelerator-pedal-opening-degree thresholds. The driving modes of the vehicle may include a sport mode, a standard mode and an energy saving mode.

In this step, the different driving modes may correspond to different ranges of the operation-condition parameters, and the different driving modes correspond to different operation-condition-parameter thresholds. Therefore, by comparing the operation-condition parameters in the current operation condition with the preset operation-condition-parameter thresholds, the target driving mode corresponding to the current operation condition can be determined.

The particular implementations of the step 202 will be described below by taking the mutual switchings among the sport mode, the standard mode and the energy saving mode as examples.

In the first case, the current driving mode is the sport mode, and the target driving mode is the standard mode or the energy saving mode.

In a scene, when the current driving mode is the sport mode, if the current operation condition satisfies a first operation-condition situation, the target driving mode is determined to be the energy saving mode. The first operation-condition situation comprises that the residual capacity is less than a first electric-quantity threshold and a first requesting signal is not detected, wherein the first requesting signal is for instructing to switch the driving mode of the vehicle from the sport mode to the standard mode.

As an example, the first electric-quantity threshold may be 20%. Particularly, when the controller of the vehicle has identified that the current driving mode is the sport mode, the residual capacity is less than 20%, and the first requesting signal is not detected, the controller triggers the requesting signal for switching the driving mode from the sport mode to the energy saving mode.

When the current driving mode is the sport mode, if the residual capacity is less than the first electric-quantity threshold (for example, 20%), that indicates that at this point the residual capacity of the battery pack is very low, and cannot satisfy the requirement on the outputted power of the sport mode any longer. Furthermore, the requesting signal for switching the sport mode to the standard mode is not detected. In this case, in order to increase the endurance mileage of the vehicle, the driving mode may be switched from the sport mode to the energy saving mode.

In another scene, when the current driving mode is the sport mode, if the current operation condition satisfies a second operation-condition situation, the target driving mode is determined to be the standard mode. The second operation-condition situation comprises that the residual capacity is less than a second electric-quantity threshold and a second requesting signal is not detected, wherein the second requesting signal is for instructing to switch the driving mode of the vehicle from the sport mode to the energy saving mode, and the second electric-quantity threshold is larger than the first electric-quantity threshold.

As an example, the second electric-quantity threshold may be 30%. Particularly, when the controller of the vehicle has identified that the current driving mode is the sport mode, the residual capacity is less than 30%, and the second requesting signal is not detected, the controller triggers the requesting signal for switching the driving mode from the sport mode to the standard mode.

When the current driving mode is the sport mode, if the residual capacity is less than the second electric-quantity threshold (for example, 30%), that indicates that at this point the residual capacity of the battery pack is low, and cannot satisfy the requirement on the outputted power of the sport mode any longer. However, the second electric-quantity threshold is larger than the first electric-quantity threshold to a certain extent, and, if the requesting signal for switching the sport mode to the energy saving mode is not detected, in this case, in order to increase the endurance mileage of the vehicle and, at the same time, be capable of satisfying a certain demand on the driving performance by the driver, the driving mode may be switched from the sport mode to the standard mode.

In another scene, when the current driving mode is the sport mode, if the duration for which the current operation condition maintains as a third operation-condition situation is larger than or equal to a first preset duration, the target driving mode is determined to be the energy saving mode. The third operation-condition situation comprises that the residual capacity is larger than or equal to the first electric-quantity threshold, the travelling speed of the vehicle is less than a first speed threshold or the opening degree of the accelerator pedal is less than a first opening-degree threshold, and the first requesting signal is not detected.

As an example, the first speed threshold may be 20km/h, the first opening-degree threshold may be 10%, and the first preset duration may be 300 seconds.

As an example, if the current driving mode is the sport mode, among the conditions that the residual capacity is larger than 20%, that the travelling speed is less than 20km/h, and that the first requesting signal is not detected, the controller starts to time when all of those conditions are satisfied, and the timing is reset to 0 when at least one of those conditions is not satisfied. When the timing has exceeded 300 seconds, the controller triggers the requesting signal for switching the driving mode from the sport mode to the energy saving mode.

As an example, if the current driving mode is the sport mode, among the conditions that the residual capacity is larger than 20%, that the opening degree of the accelerator pedal is less than 10%, and that the first requesting signal is not detected, the controller starts to time when all of those conditions are satisfied, and the timing is reset to 0 when at least one of those conditions is not satisfied. When the timing has exceeded 300 seconds, the controller triggers the requesting signal for switching the driving mode from the sport mode to the energy saving mode.

When the current driving mode is the sport mode, if the residual capacity is larger than or equal to the first electric-quantity threshold (for example, 20%), that indicates that at this point the residual capacity of the battery pack is low, and cannot satisfy the requirement on the outputted power of the sport mode any longer. Furthermore, if the duration for which the travelling speed is less than the first speed threshold (for example, 20km/h) is long, or the duration for which the opening degree of the accelerator pedal is less than the first opening-degree threshold (for example, 10%) is long, that indicates that the travelling speed is very low or the opening degree of the accelerator pedal is very low, and at this point the driver intends to increase the endurance mileage of the vehicle and does not require experience on the driving performance. If the requesting signal for switching the sport mode to the standard mode is not detected, the driving mode may be switched from the sport mode to the energy saving mode.

In another scene, when the current driving mode is the sport mode, if the duration for which the current operation condition maintains as a fourth operation-condition situation is larger than or equal to a second preset duration, the target driving mode is determined to be the standard mode. The fourth operation-condition situation comprises that the residual capacity is larger than or equal to the second electric-quantity threshold, the travelling speed of the vehicle is less than a second speed threshold, the opening degree of the accelerator pedal is less than a second opening-degree threshold, and the second requesting signal is not detected, wherein the second speed threshold is larger than the first speed threshold, and the second opening-degree threshold is larger than the first opening-degree threshold.

As an example, the second speed threshold may be 40km/h, the second opening-degree threshold may be 20%, and the second preset duration may be 300 seconds. Particularly, if the current driving mode is the sport mode, among the conditions that the residual capacity is larger than 30%, that the travelling speed is less than 40km/h, that the opening degree of the accelerator pedal is less than 20%, and that the second requesting signal is not detected, the controller starts to time when all of those conditions are satisfied, and the timing is reset to 0 when at least one of those conditions is not satisfied. When the timing has exceeded 300 seconds, the controller triggers the requesting signal for switching the driving mode from the sport mode to the standard mode.

When the current driving mode is the sport mode, if the residual capacity is larger than or equal to the second electric-quantity threshold (for example, 30%), that indicates that at this point the residual capacity of the battery pack is low. Furthermore, if the duration for which the travelling speed is less than the second speed threshold (for example, 40km/h) is long, or the duration for which the opening degree of the accelerator pedal is less than the second opening-degree threshold (for example, 20%) is long, that indicates that the travelling speed is low or the opening degree of the accelerator pedal is low, and at this point the driver intends to increase the endurance mileage of the vehicle and has a certain demand on the driving performance. If the requesting signal for switching the sport mode to the energy saving mode is not detected, the driving mode may be switched from the sport mode to the standard mode.

In the second case, the current driving mode is the energy saving mode, and the target driving mode is the standard mode or the sport mode.

In a scene, when the current driving mode is the energy saving mode, if the duration for which the current operation condition maintains as a fifth operation-condition situation is larger than or equal to a third preset duration, or the current operation condition satisfies the fifth operation-condition situation and the slope of the current travelling road is larger than a first slope threshold, the target driving mode is determined to be the sport mode. The fifth operation-condition situation comprises that the residual capacity is larger than or equal to the second electric-quantity threshold, the travelling speed of the vehicle is larger than or equal to a third speed threshold or the opening degree of the accelerator pedal is larger than or equal to a third opening-degree threshold, and a third requesting signal is not detected, wherein the third requesting signal is for instructing to switch the driving mode of the vehicle from the energy saving mode to the standard mode.

As an example, the third speed threshold may be 80km/h, the third opening-degree threshold may be 60%, the first slope threshold may be 30°, and the third preset duration may be 300 seconds.

As an example, if the current driving mode is the energy saving mode, among the conditions that the residual capacity is larger than or equal to 30%, that the third requesting signal is not detected, and that the opening degree of the accelerator pedal is larger than 60%, the controller starts to time when all of those conditions are satisfied, and the timing is reset to 0 when at least one of those conditions is not satisfied. When the timing has exceeded 300 seconds, the controller triggers the requesting signal for switching the driving mode from the energy saving mode to the sport mode.

As an example, if the current driving mode is the energy saving mode, the residual capacity is larger than or equal to 30%, the third requesting signal is not detected, the opening degree of the accelerator pedal is larger than 60%, and the slope of the current travelling road is larger than 30°, the controller triggers the requesting signal for switching the driving mode from the energy saving mode to the sport mode.

As an example, if the current driving mode is the energy saving mode, among the conditions that the residual capacity is larger than or equal to 30%, that the third requesting signal is not detected, and that the travelling speed is larger than or equal to 80km/h, the controller starts to time when all of those conditions are satisfied, and the timing is reset to 0 when at least one of those conditions is not satisfied. When the timing has exceeded 300 seconds, the controller triggers the requesting signal for switching the driving mode from the energy saving mode to the sport mode.

As an example, if the current driving mode is the energy saving mode, the residual capacity is larger than or equal to 30%, the third requesting signal is not detected, the travelling speed is larger than or equal to 80km/h, and the slope of the current travelling road is larger than 30°, the controller triggers the requesting signal for switching the driving mode from the energy saving mode to the sport mode.

When the current driving mode is the energy saving mode, if the residual capacity is larger than or equal to the second electric-quantity threshold (for example, 30%), that indicates that at this point the residual capacity of the battery pack is not too low. Furthermore, if the duration for which the travelling speed is larger than or equal to the third speed threshold (for example, 80km/h) is long, or the duration for which the opening degree of the accelerator pedal is larger than or equal to the third opening-degree threshold (for example, 60%) is long, or the slope is larger than the first slope threshold (for example, 30°), that indicates that at this point the travelling speed is high or the opening degree of the accelerator pedal is high or the road slope is high, and at this point the driver has a high requirement on the driving performance of the vehicle. If the requesting signal for switching the energy saving mode to the standard mode is not detected, in this case the driving mode may be switched from the energy saving mode to the sport mode, so as to satisfy the demand on the vehicle driving by the driver to the largest extent.

In a scene, when the current driving mode is the energy saving mode, if the duration for which the current operation condition maintains as a sixth operation-condition situation is larger than or equal to a fourth preset duration, or the current operation condition satisfies the sixth operation-condition situation and the slope of the current travelling road is between a second slope threshold and the first slope threshold, the target driving mode is determined to be the standard mode. The sixth operation-condition situation comprises that the residual capacity is larger than or equal to the first electric-quantity threshold, the travelling speed of the vehicle is larger than or equal to a fourth speed threshold or the opening degree of the accelerator pedal is larger than or equal to a fourth opening-degree threshold, and a fourth requesting signal is not detected, wherein the fourth requesting signal is for instructing to switch the driving mode of the vehicle from the energy saving mode to the sport mode.

As an example, the fourth speed threshold may be 70km/h, the fourth opening-degree threshold may be 50%, the second slope threshold may be 20°, and the fourth preset duration may be 500 seconds.

As an example, if the current driving mode is the energy saving mode, among the conditions that the residual capacity is larger than 20%, that the opening degree of the accelerator pedal is larger than 50%, and that the fourth requesting signal is not detected, the controller starts to time when all of those conditions are satisfied, and the timing is reset to 0 when any one of those conditions is not satisfied. When the timing has exceeded 500s, the controller triggers the requesting signal for switching the driving mode from the energy saving mode to the standard mode.

As an example, if the current driving mode is the energy saving mode, among the conditions that the residual capacity is larger than 20%, that the travelling speed is larger than 70km/h, and that the fourth requesting signal is not detected, the controller starts to time when all of those conditions are satisfied, and the timing is reset to 0 when any one of those conditions is not satisfied. When the timing has exceeded 500s, the controller triggers the requesting signal for switching the driving mode from the energy saving mode to the standard mode.

As an example, if the current driving mode is the energy saving mode, the residual capacity is larger than 20%, the opening degree of the accelerator pedal is larger than 50%, the fourth requesting signal is not detected, and the slope of the current travelling road is between 20° and 30°, the controller triggers the requesting signal for switching the driving mode from the energy saving mode to the standard mode.

As an example, if the current driving mode is the energy saving mode, the residual capacity is larger than 20%, the travelling speed is larger than 70km/h, the fourth requesting signal is not detected, and the slope of the current travelling road is between 20° and 30°, the controller triggers the requesting signal for switching the driving mode from the energy saving mode to the standard mode.

When the current driving mode is the energy saving mode, if the duration for which the travelling speed is larger than or equal to the fourth speed threshold (for example, 70km/h) is long, or the duration for which the opening degree of the accelerator pedal is larger than or equal to the third opening-degree threshold (for example, 50%) is long, or the slope is larger than the second slope threshold (for example, 20%) and less than the first slope threshold (for example, 30%), that indicates that the travelling speed is high or the opening degree of the accelerator pedal is high or the road has a slope but the slope is not too large, and at this point the driver has a high requirement on the driving performance of the vehicle. However, at this point the residual capacity of the battery pack is larger than or equal to the first electric-quantity threshold (for example, 20%), which indicates that the residual capacity of the battery pack is low, and the sport mode is not appropriate. Therefore, if the requesting signal for switching the energy saving mode to the sport mode is not detected, the driving mode may be switched from the energy saving mode to the standard mode, so as to satisfy the demand on the driving performance of the vehicle by the driver to the largest extent, and at the same time increasing the endurance mileage of the vehicle.

In the third case, the current driving mode is the standard mode, and the target driving mode is the energy saving mode or the sport mode.

In a scene, when the current driving mode is the standard mode, if the duration for which the current operation condition maintains as a seventh operation-condition situation is larger than or equal to a fifth preset duration, or the current operation condition satisfies the seventh operation-condition situation and the slope of the current travelling road is larger than or equal to a third slope threshold, or the current operation condition satisfies the seventh operation-condition situation and the stroke speed of the accelerator pedal is larger than or equal to an accelerator-pedal-travel-speed threshold, the target driving mode is determined to be the sport mode. The seventh operation-condition situation comprises that the residual capacity is larger than or equal to a third electric-quantity threshold, the travelling speed of the vehicle is larger than or equal to a fifth speed threshold or the opening degree of the accelerator pedal is larger than or equal to a fifth opening-degree threshold, and a fifth requesting signal is not detected, wherein the fifth requesting signal is for instructing to switch the driving mode of the vehicle from the standard mode to the energy saving mode.

As an example, the fifth preset duration may be 500 seconds, the third slope threshold may be 40°, the accelerator-pedal-travel-speed threshold may be 40% per second, the third electric-quantity threshold may be 40%, the fifth speed threshold may be 120km/h, and the fifth opening-degree threshold may be 80%.

As an example, if the current driving mode is the standard mode, among the conditions that the residual capacity is larger than or equal to 40%, that the opening degree of the accelerator pedal is larger than or equal to 80%, and that the fifth requesting signal is not detected, the controller starts to time when all of those conditions are satisfied, and the timing is reset to 0 when any one of those conditions is not satisfied. When the timing has exceeded 500s, the controller triggers the requesting signal for switching the driving mode from the standard mode to the sport mode.

As an example, if the current driving mode is the standard mode, among the conditions that the residual capacity is larger than or equal to 40%, that the travelling speed is larger than or equal to 120km/h, and that the fifth requesting signal is not detected, the controller starts to time when all of those conditions are satisfied, and the timing is reset to 0 when any one of those conditions is not satisfied. When the timing has exceeded 500s, the controller triggers the requesting signal for switching the driving mode from the standard mode to the sport mode.

As an example, if the current driving mode is the standard mode, the residual capacity is larger than or equal to 40%, the opening degree of the accelerator pedal is larger than or equal to 80%, the fifth requesting signal is not detected, and the slope of the current travelling road is larger than or equal to 40°, the controller triggers the requesting signal for switching the driving mode from the standard mode to the sport mode.

As an example, if the current driving mode is the standard mode, the residual capacity is larger than or equal to 40%, the travelling speed is larger than or equal to 120km/h, the fifth requesting signal is not detected, and the slope of the current travelling road is larger than or equal to 40°, the controller triggers the requesting signal for switching the driving mode from the standard mode to the sport mode.

As an example, if the current driving mode is the standard mode, the residual capacity is larger than or equal to 40%, the opening degree of the accelerator pedal is larger than or equal to 80%, the fifth requesting signal is not detected, and the stroke speed of the accelerator pedal is larger than 40% per second, the controller triggers the requesting signal for switching the driving mode from the standard mode to the sport mode.

As an example, if the current driving mode is the standard mode, the residual capacity is larger than or equal to 40%, the travelling speed is larger than or equal to 120km/h, the fifth requesting signal is not detected, and the stroke speed of the accelerator pedal is larger than 40% per second, the controller triggers the requesting signal for switching the driving mode from the standard mode to the sport mode.

When the current driving mode is the standard mode, if the residual capacity is larger than or equal to the third electric-quantity threshold (for example, 40%), that indicates that the residual capacity of the battery pack is high, and, if the travelling speed of the vehicle is high (for example, larger than or equal to 120km/h), or the opening degree of the accelerator pedal is very high (for example, larger than 80%), or the slope is very large (for example, larger than 40%), or the stroke speed of the accelerator pedal is very high (for example, 40% per second), that indicates that at this point the driver has a very high requirement on the driving performance of the vehicle. If the requesting signal for switching the standard mode to the energy saving mode is not detected, the driving mode may be switched from the standard mode to the sport mode.

In another scene, when the current driving mode is the standard mode, if the current operation condition satisfies an eighth operation-condition situation, the target driving mode is determined to be the energy saving mode. The eighth operation-condition situation comprises that the residual capacity is less than a fourth electric-quantity threshold and a sixth requesting signal is not detected, wherein the sixth requesting signal is for instructing to switch the driving mode of the vehicle from the standard mode to the sport mode.

As an example, the fourth electric-quantity threshold may be 10%. Particularly, when the controller of the vehicle has identified that the current driving mode is the sport mode, the residual capacity is less than 10%, and the sixth requesting signal is not detected, the controller triggers the requesting signal for switching the driving mode from the sport mode to the energy saving mode.

When the current driving mode is the standard mode, if the residual capacity is less than the fourth electric-quantity threshold (for example, 10%), that indicates that the residual capacity of the battery pack is very low, and cannot satisfy the requirement on the outputted power of the sport mode any longer. Furthermore, the requesting signal for switching the standard mode to the sport mode is not detected. In this case, in order to increase the endurance mileage of the vehicle, the driving mode may be switched from the standard mode to the energy saving mode.

In another scene, when the current driving mode is the standard mode, if the duration for which the current operation condition maintains as a ninth operation-condition situation is larger than or equal to a sixth preset duration, the target driving mode is determined to be the energy saving mode. The ninth operation-condition situation comprises that the residual capacity is larger than or equal to the fourth electric-quantity threshold, the travelling speed of the vehicle is less than a sixth speed threshold or the opening degree of the accelerator pedal is less than a sixth opening-degree threshold, and the sixth requesting signal is not detected.

As an example, the sixth preset duration may be 500 seconds, the fourth electric-quantity threshold may be 10%, the sixth speed threshold may be 10km/h, and the sixth opening-degree threshold may be 5%.

As an example, if the current driving mode is the standard mode, among the conditions that the residual capacity is larger than 10%, that the travelling speed is less than 10km/h, and that the sixth requesting signal is not detected, the controller starts to time when all of those conditions are satisfied, and the timing is reset to 0 when at least one of those conditions is not satisfied. When the timing has exceeded 500 seconds, the controller triggers the requesting signal for switching the driving mode from the standard mode to the energy saving mode.

As an example, if the current driving mode is the standard mode, among the conditions that the residual capacity is larger than 10%, that the opening degree of the accelerator pedal is less than 5%, and that the sixth requesting signal is not detected, the controller starts to time when all of those conditions are satisfied, and the timing is reset to 0 when at least one of those conditions is not satisfied. When the timing has exceeded 500 seconds, the controller triggers the requesting signal for switching the driving mode from the standard mode to the energy saving mode.

When the current driving mode is the standard mode, if the residual capacity is larger than or equal to the fourth electric-quantity threshold (for example, 10%), that indicates that at this point the residual capacity of the battery pack is low. If the duration for which the travelling speed is less than the sixth speed threshold (for example, 10km/h) is long, or the duration for which the opening degree of the accelerator pedal is less than the sixth opening-degree threshold (for example, 5%) is long, that indicates that the travelling speed is very low or the opening degree of the accelerator pedal is very low, and at this point the driver intends to increase the endurance mileage of the vehicle and does not require experience on the driving performance. In this case, the driving mode may be switched from the standard mode to the energy saving mode.

It should be noted that the first electric-quantity threshold is not limited to 20%, the second electric-quantity threshold is not limited to 30%, the third electric-quantity threshold is not limited to 40%, and the fourth electric-quantity threshold is not limited to 10%. The first to the fourth electric-quantity thresholds satisfy the relation that the third electric-quantity threshold is larger than the second electric-quantity threshold, the second electric-quantity threshold is larger than the first electric-quantity threshold, and the first electric-quantity threshold is larger than the fourth electric-quantity threshold.

The first speed threshold is not limited to 20km/h, the second speed threshold is not limited to 40km/h, the third speed threshold is not limited to 80km/h, the fourth speed threshold is not limited to 70km/h, the fifth speed threshold is not limited to 120km/h, and the sixth speed threshold is not limited to 10km/h. The first to the sixth speed thresholds satisfy the relation that the fifth speed threshold is larger than the third speed threshold, the third speed threshold is larger than the fourth speed threshold, the fourth speed threshold is larger than the second speed threshold, the second speed threshold is larger than the first speed threshold, and the first speed threshold is larger than the sixth speed threshold.

The first opening-degree threshold is not limited to 10%, the second opening-degree threshold is not limited to 20%, the third opening-degree threshold is not limited to 60%, the fourth opening-degree threshold is not limited to 50%, the fifth opening-degree threshold is not limited to 80%, and the sixth opening-degree threshold is not limited to 5%. The first to the sixth opening-degree thresholds satisfy the relation that the fifth opening-degree threshold is larger than the third opening-degree threshold, the third opening-degree threshold is larger than the fourth opening-degree threshold, the fourth opening-degree threshold is larger than the second opening-degree threshold, the second opening-degree threshold is larger than the first opening-degree threshold, and the first opening-degree threshold is larger than the sixth opening-degree threshold.

The first slope threshold is not limited to 30%, the second slope threshold is not limited to 20%, and the third slope threshold is not limited to 40%. The first to the third slope thresholds satisfy the relation that the third slope threshold is larger than the first slope threshold, and the first slope threshold is larger than the second slope threshold.

In addition, the accelerator-pedal-travel-speed threshold is not limited to 40%/s, which is merely an example for the description.

Step 203: in response to a driving-mode switching instruction inputted by a user based on the target driving mode, switching the driving mode of the vehicle to the target driving mode.

In an alternative embodiment, the step 203 may comprise:
based on the target driving mode, generating a driving-mode-switching requesting signal;
in response to the driving-mode-switching requesting signal, reporting a driving-mode switching request to the user; and
in response to the driving-mode switching instruction inputted by the user, switching the driving mode of the vehicle to the target driving mode.

For example, after the target driving mode corresponding to the current operation condition has been determined, the driving-mode-switching requesting signal may be generated. After the vehicle instrument has identified that the rising edge of the driving-mode-switching requesting signal has been triggered, the request for switching the current driving mode to the target driving mode may be reported to the user. The user may speak a particular content, the input the driving-mode switching instruction, to switch the driving mode of the vehicle to the target driving mode. For example, the particular content may be "accept", "accept to switch the driving mode", and so on.

In the method for switching driving modes, the current operation condition of the vehicle can be acquired, wherein the current operation condition comprises the following operation-condition parameters: the current driving mode, the residual capacity of the battery, and the travelling speed of the vehicle or the opening degree of the accelerator pedal. Subsequently, according to the current operation condition and operation-condition-parameter thresholds, the target driving mode of the vehicle is determined, wherein the operation-condition-parameter thresholds include a residual-capacity threshold, travelling-speed thresholds and accelerator-pedal-opening-degree thresholds. If the user inputs the driving-mode switching instruction based on the target driving mode, then, in response to the driving-mode switching instruction, the driving mode of the vehicle is switched to the target driving mode. In other words, by using the method for switching driving modes, the vehicle can automatically determine the driving mode corresponding to the current operation condition of the vehicle, and enable the user to select whether to switch the driving mode, thereby realizing automatic regulation of the driving modes and not requiring manual regulation by the driver, which can improve the safety of the vehicle driving.

It should be understood that the sequence of the serial numbers of the steps in the above embodiments do not indicate the sequence of the execution thereof, and the sequence of the execution of the steps should be decided according to their functions and internal logic, and should not limit the implementation of the embodiments of the present application in any manner.

The device embodiments of the present application will be described below, and the details not described in detail therein may refer to the above-described corresponding process embodiments.

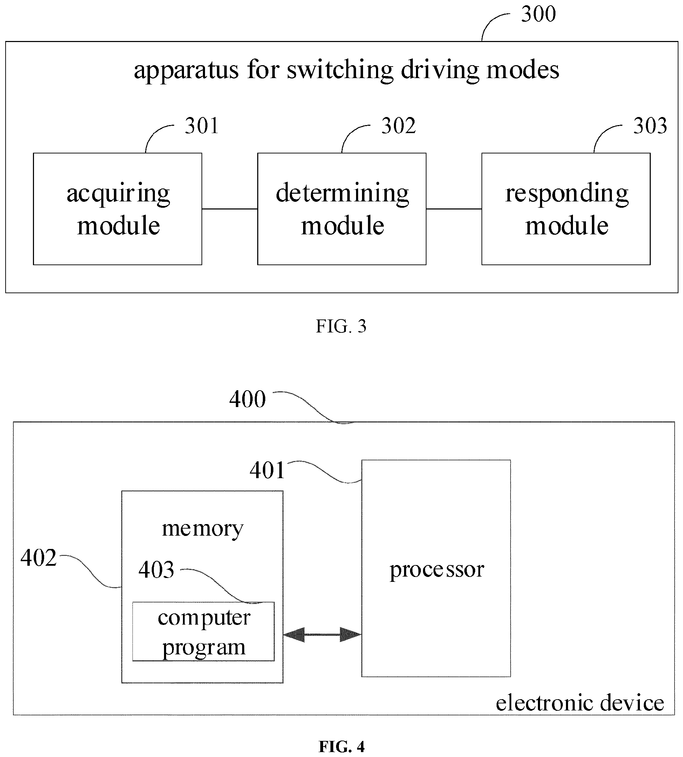

FIG. 3 is a schematic structural diagram of an apparatus for switching driving modes according to an embodiment of the present application. For the convenience of the description, the figure merely shows the parts relevant to the embodiments of the present application, and it will be described in detail as follows.

As shown in FIG. 3, the apparatus for switching driving modes may comprise an acquiring module 301, a determining module 302 and a responding module 303.

The acquiring module 301 is configured for acquiring a current operation condition of a vehicle, wherein the current operation condition comprises the following operation-condition parameters: a current driving mode, a residual capacity of a battery, and a travelling speed of the vehicle or an opening degree of an accelerator pedal. The determining module 302 is configured for, according to the current operation condition and operation-condition-parameter thresholds, determining a target driving mode of the vehicle, wherein the operation-condition-parameter thresholds include a residual-capacity threshold, travelling-speed thresholds and accelerator-pedal-opening-degree thresholds. The responding module 303 is configured for, in response to a driving-mode switching instruction inputted by a user based on the target driving mode, switching the driving mode of the vehicle to the target driving mode.

In an alternative embodiment, the determining module 302 may be particularly configured for:
when the current driving mode is a sport mode, if the current operation condition satisfies a first operation-condition situation, determining the target driving mode to be an energy saving mode;
wherein the first operation-condition situation comprises that the residual capacity is less than a first electric-quantity threshold and a first requesting signal is not detected, wherein the first requesting signal is for instructing to switch the driving mode of the vehicle from the sport mode to a standard mode.

In an alternative embodiment, the determining module 302 may be particularly configured for:
if the current operation condition satisfies a second operation-condition situation, determining the target driving mode to be the standard mode;
wherein the second operation-condition situation comprises that the residual capacity is less than a second electric-quantity threshold and a second requesting signal is not detected, wherein the second requesting signal is for instructing to switch the driving mode of the vehicle from the sport mode to the energy saving mode, and the second electric-quantity threshold is larger than the first electric-quantity threshold.

In an alternative embodiment, the determining module 302 may be particularly configured for:
when the current driving mode is a sport mode, if a duration for which the current operation condition maintains as a third operation-condition situation is larger than or equal to a first preset duration, determining the target driving mode to be an energy saving mode;
wherein the third operation-condition situation comprises that the residual capacity is larger than or equal to a first electric-quantity threshold, the travelling speed of the vehicle is less than a first speed threshold or the opening degree of the accelerator pedal is less than a first opening-degree threshold, and a first requesting signal is not detected, wherein the first requesting signal is for instructing to switch the driving mode of the vehicle from the sport mode to a standard mode.

In an alternative embodiment, the determining module 302 may be particularly configured for:
if a duration for which the current operation condition maintains as a fourth operation-condition situation is larger than or equal to a second preset duration, determining the target driving mode to be the standard mode;
wherein the fourth operation-condition situation comprises that the residual capacity is larger than or equal to a second electric-quantity threshold, the travelling speed of the vehicle is less than a second speed threshold or the opening degree of the accelerator pedal is less than a second opening-degree threshold, and a second requesting signal is not detected, wherein the second requesting signal is for instructing to switch the driving mode of the vehicle from the sport mode to the energy saving mode, the second electric-quantity threshold is larger than the first electric-quantity threshold, the second speed threshold is larger than the first speed threshold, and the second opening-degree threshold is larger than the first opening-degree threshold.

In an alternative embodiment, the determining module 302 may be particularly configured for:
when the current driving mode is an energy saving mode, if a duration for which the current operation condition maintains as a fifth operation-condition situation is larger than or equal to a third preset duration, or the current operation condition satisfies the fifth operation-condition situation and a slope of a current travelling road is larger than a first slope threshold, determining the target driving mode to be a sport mode;
wherein the fifth operation-condition situation comprises that the residual capacity is larger than or equal to a second electric-quantity threshold, the travelling speed of the vehicle is larger than or equal to a third speed threshold or the opening degree of the accelerator pedal is larger than or equal to a third opening-degree threshold, and a third requesting signal is not detected, wherein the third requesting signal is for instructing to switch the driving mode of the vehicle from the energy saving mode to a standard mode.

In an alternative embodiment, the determining module 302 may be particularly configured for:
when the current driving mode is an energy saving mode, if a duration for which the current operation condition maintains as a sixth operation-condition situation is larger than or equal to a fourth preset duration, or the current operation condition satisfies the sixth operation-condition situation and a slope of a current travelling road is between a second slope threshold and a first slope threshold, determining the target driving mode to be a standard mode;
wherein the sixth operation-condition situation comprises that the residual capacity is larger than or equal to a first electric-quantity threshold, the travelling speed of the vehicle is larger than or equal to a fourth speed threshold or the opening degree of the accelerator pedal is larger than or equal to a fourth opening-degree threshold, and a fourth requesting signal is not detected, wherein the fourth requesting signal is for instructing to switch the driving mode of the vehicle from the energy saving mode to a sport mode.

In an alternative embodiment, the determining module 302 may be particularly configured for:
when the current driving mode is a standard mode, if a duration for which the current operation condition maintains as a seventh operation-condition situation is larger than or equal to a fifth preset duration, or the current operation condition satisfies the seventh operation-condition situation and a slope of a current travelling road is larger than or equal to a third slope threshold, or the current operation condition satisfies the seventh operation-condition situation and a stroke speed of the accelerator pedal is larger than or equal to an accelerator-pedal-travel-speed threshold, determining the target driving mode to be a sport mode;
wherein the seventh operation-condition situation comprises that the residual capacity is larger than or equal to a third electric-quantity threshold, the travelling speed of the vehicle is larger than or equal to a fifth speed threshold or the opening degree of the accelerator pedal is larger than or equal to a fifth opening-degree threshold, and a fifth requesting signal is not detected, wherein the fifth requesting signal is for instructing to switch the driving mode of the vehicle from the standard mode to an energy saving mode.

In an alternative embodiment, the determining module 302 may be particularly configured for:
when the current driving mode is a standard mode, if the current operation condition satisfies an eighth operation-condition situation, determining the target driving mode to be an energy saving mode;
wherein the eighth operation-condition situation comprises that the residual capacity is less than a fourth electric-quantity threshold and a sixth requesting signal is not detected, wherein the sixth requesting signal is for instructing to switch the driving mode of the vehicle from the standard mode to a sport mode.

In an alternative embodiment, the determining module 302 may be particularly configured for:
if a duration for which the current operation condition maintains as a ninth operation-condition situation is larger than or equal to a sixth preset duration, determining the target driving mode to be the energy saving mode;
wherein the ninth operation-condition situation comprises that the residual capacity is larger than or equal to a fourth electric-quantity threshold, the travelling speed of the vehicle is less than a sixth speed threshold or the opening degree of the accelerator pedal is less than a sixth opening-degree threshold, and the sixth requesting signal is not detected, wherein the sixth requesting signal is for instructing to switch the driving mode of the vehicle from the standard mode to the sport mode.

In an alternative embodiment, the responding module 303 may be particularly configured for:
based on the target driving mode, generating a driving-mode-switching requesting signal;
in response to the driving-mode-switching requesting signal, reporting a driving-mode switching request to the user; and
in response to the driving-mode switching instruction inputted by the user, switching the driving mode of the vehicle to the target driving mode.

The present application provides a vehicle, comprising an electronic device, the electronic device comprising a memory, a processor, and a computer program that is stored in the memory and executable in the processor, wherein the processor, when executing the computer program, implements the steps of any one of the above embodiments of the method for switching driving modes, for example, the step 201 to the step 203 shown in FIG. 2.

The present application further provides a computer program product, wherein the computer program product has a program code, and the program code, when executed in a corresponding processor, controller, computing device or terminal, implements the steps of any one of the above embodiments of the method for switching driving modes, for example, the step 201 to the step 203 shown in FIG. 2.

A person skilled in the art should understand that the method and the device according to the present application may be embodied in various forms of hardware, software, firmware, dedicated processors or a combination thereof. The dedicated processors may be an Application Specific Integrated Circuit (ASIC), a Reduced Instruction-Set Computer (RISC) and/or a Field-Programmable Gate Array (FPGA). The method and the device are preferably embodied as a combination of hardware and software. The software is preferably installed in a program storage device as an application program. It is typically a machine based on a computer platform having hardware, for example, one or more central processing units (CPU), a Random Access Memory (RAM) and one or more inputting/outputting (I/O) interfaces. The operating system is typically also installed in the computer platform. The processes and the functions described herein may be part of the application program, or part of them may be performed by the operating system.

FIG. 4 is a schematic structural diagram of an electronic device according to the present application. As shown in FIG. 4, the electronic device 400 comprises a processor 401, a memory 402, and a computer program 403 that is stored in the memory 402 and executable in the processor 401. The processor 401, when executing the computer program 403, implements the steps of the above embodiments of the method for switching driving modes, for example, the step 201 to the step 203 shown in FIG. 2. Alternatively, the processor 401, when executing the computer program 403, implements the functions of the modules according to the above device embodiments, for example, the functions of the modules 301 to 303 shown in FIG. 3.

As an example, the computer program 403 may be divided into one or more modules. For example, the computer program 403 may be divided into the modules/units 301 to 303 shown in FIG. 3. Those modules may be stored in the memory 402, and executed by the processor 401, to complete/implement the solutions according to the embodiments of the present application. The modules may be a series of computer program instruction segments that can complete specific functions, and the instruction segments can describe the process of the execution of the computer program 403 in the electronic device 400.

The electronic device 400 may be a computing device such as a vehicle controller, a mobile phone, a notebook computer, a palmtop and a cloud server. The electronic device 400 may comprise, without limitation, a processor 401 and a memory 402. A person skilled in the art can understand that FIG. 4 is merely an example of the electronic device 400, and does not limit the electronic device 400, and the electronic device 400 may comprise more or fewer components than those shown in the figure, or a combination of some of the components, or different components. For example, the electronic device 400 may further comprise an inputting-outputting device, a network accessing device, a bus and so on.

The processors 401 may be a Central Processing Unit (CPU), and may also be another generic processor, Digital Signal Processor (DSP), Application Specific Integrated Circuit (ASIC), Field-Programmable Gate Array (FPGA) or another programmable logic device, discrete gate or transistor logic device, discrete hardware assembly and so on. The generic processor may be a microprocessor or any other conventional processor.

The memory 402 may be an internal storage unit of the electronic device 400, for example, a hard disk or an internal memory of the electronic device 400. The memory 402 may also be an external storage device of the electronic device 400, for example, a plug-connected hard disk, a Smart Media Card (SMC), a Secure Digital (SD) card, a Flash Card, and so on, that the electronic device 400 is equipped with. Further, the memory 402 may also include not only the internal storage unit of the electronic device 400 but also the external storage device. The memory 402 is configured to store the computer program 403, and other programs and data that are required by the electronic device 400. The memory 402 may also be configured to temporarily store the data that have already been outputted or will be outputted.

A person skilled in the art can clearly understand that, in order for convenience and brevity of the description, the division of the above functional units and modules is merely taken as an example for the description. In practical applications, the above functions may be allocated to be completed by different functional units and modules according to demands, i.e., dividing the internal structure of the apparatus into different functional units or modules, to complete all or some of the functions described above. The functional units and modules according to the embodiments may be integrated into one processing unit, or the units may also separately physically exist, or two or more of the units may also be integrated into one unit. The above-described integrated unit may be embodied in the form of hardware, and may also be embodied in the form of a software function unit. In addition, the particular names of the functional units and modules are merely for the convenience of distinguishing from each other, and are not intended to limit the protection scope of the present application. The particular working processes of the units and modules in the above-described apparatus may refer to the corresponding processes according to the above-described process embodiments, and are not discussed further herein.

In the above embodiments, the descriptions on the embodiments have respective emphases, and the parts of a certain embodiment that are not described or set forth in detail may refer to the relevant descriptions on the other embodiments.

A person skilled in the art can envisage that the units and the algorithm steps of the examples described by the embodiments disclosed herein may be implemented by using electronic hardware or a combination of computer software and electronic hardware. Whether those functions are executed by hardware or software depends on the particular applications and the design constraints of the technical solutions. A person skilled in the art may employ different methods to implement the described functions with respect to each of the particular applications, but the implementation methods should not be considered as extending beyond the scope of the present application.

In the embodiments of the present application, it should be understood that the disclosed apparatus/terminal and method may be implemented in other manners. For example, the above-described device/terminal embodiments are merely illustrative. For example, the division between the modules/units is merely a division in the logic functions, and in the practical implementation there may be another mode of division. For example, multiple units or components may be combined or may be integrated into another system, or some of the features may be omitted, or not implemented. Additionally, the coupling or direct coupling or communicative connection between the illustrated or discussed components may be via interfaces or the indirect coupling or communicative connection between the devices or units, and may be electric, mechanical or in other forms.

The units that are described as separate components may or may not be physically separate, and the components that are displayed as units may or may not be physical units. In other words, the components and the units may be located at the same one location, and may also be distributed to a plurality of network units. Some or all of the units may be selected according to practical demands to realize the purposes of the embodiments.

The integrated modules/units, if embodied in the form of software function units and sold or used as an independent product, may be stored in a computer-readable storage medium. On the basis of such a comprehension, all or some of the processes of the methods according to the embodiments of the present application may be implemented by relative hardware under control by a computer program. The computer program may be stored in a computer-readable storage medium, and the computer program, when executed by a processor, can implement the steps of the above embodiments of the method for switching driving modes. The computer program comprises a computer program code, and the computer program code may be a source code, an object code, an executable file, some intermediate forms, and so on. The computer-readable medium may include any entity or device that can carry the computer program code, including a recording medium, a USB flash disk, a mobile hard disk drive, a diskette, an optical disk, a computer memory, a Read-Only Memory (ROM), a Random Access Memory (RAM), an electric carrier signal, a telecommunication signal, a software distribution medium and so on. It should also be noted that the contents included by the computer-readable medium may be properly added or removed according to the requirements by the practices of the legislation and the patent within jurisdictions. For example, within certain jurisdictions, according to the practices of the legislation and the patent, the computer-readable medium does not include an electric carrier signal and a telecommunication signal.

In addition, the embodiments shown in the drawings of the present application or the features of the embodiments described in the description are not required to be understood as mutually independent embodiments. Instead, each of the features described in one of the examples of one embodiment may be combined with one or more other desired features from the other embodiments, thereby generating another embodiment not described in the texts or with reference to the drawings.

The above embodiments are merely intended to describe the technical solutions of the present application, and not to limit them. Although the present application is explained in detail with reference to the above embodiments, a person skilled in the art should understand that he can still modify the technical solutions set forth by the above embodiments, or make equivalent substitutions to part of the technical features of them. However, those modifications or substitutions do not make the essence of the corresponding technical solutions depart from the spirit and scope of the technical solutions of the embodiments of the present application, and all of them should fall within the protection scope of the present application.

## Claims

1. A method for switching driving modes, **characterised in that** the method comprises:
acquiring a current operation condition of a vehicle, wherein the current operation condition comprises the following operation-condition parameters: a current driving mode, a residual capacity of a battery, and a travelling speed of the vehicle or an opening degree of an accelerator pedal;
according to the current operation condition and operation-condition-parameter thresholds, determining a target driving mode of the vehicle, wherein the operation-condition-parameter thresholds include a residual-capacity threshold, travelling-speed thresholds and accelerator-pedal-opening-degree thresholds; and
in response to a driving-mode switching instruction inputted by a user based on the target driving mode, switching the driving mode of the vehicle to the target driving mode.

2. The method for switching driving modes according to claim 1, wherein the step of, according to the current operation condition and the operation-condition-parameter thresholds, determining the target driving mode of the vehicle comprises:
when the current driving mode is a sport mode, if the current operation condition satisfies a first operation-condition situation, determining the target driving mode to be an energy saving mode;
wherein the first operation-condition situation comprises that the residual capacity is less than a first electric-quantity threshold and a first requesting signal is not detected, wherein the first requesting signal is for instructing to switch the driving mode of the vehicle from the sport mode to a standard mode.

3. The method for switching driving modes according to claim 2, wherein the step of, according to the current operation condition, determining the target driving mode of the vehicle further comprises:
if the current operation condition satisfies a second operation-condition situation, determining the target driving mode to be the standard mode;
wherein the second operation-condition situation comprises that the residual capacity is less than a second electric-quantity threshold and a second requesting signal is not detected, wherein the second requesting signal is for instructing to switch the driving mode of the vehicle from the sport mode to the energy saving mode, and the second electric-quantity threshold is larger than the first electric-quantity threshold.

4. The method for switching driving modes according to claim 1, wherein the step of, according to the current operation condition, determining the target driving mode of the vehicle comprises:
when the current driving mode is a sport mode, if a duration for which the current operation condition maintains as a third operation-condition situation is larger than or equal to a first preset duration, determining the target driving mode to be an energy saving mode;
wherein the third operation-condition situation comprises that the residual capacity is larger than or equal to a first electric-quantity threshold, the travelling speed of the vehicle is less than a first speed threshold or the opening degree of the accelerator pedal is less than a first opening-degree threshold, and a first requesting signal is not detected, wherein the first requesting signal is for instructing to switch the driving mode of the vehicle from the sport mode to a standard mode.

5. The method for switching driving modes according to claim 4, wherein the step of, according to the current operation condition, determining the target driving mode of the vehicle further comprises:
if a duration for which the current operation condition maintains as a fourth operation-condition situation is larger than or equal to a second preset duration, determining the target driving mode to be the standard mode;
wherein the fourth operation-condition situation comprises that the residual capacity is larger than or equal to a second electric-quantity threshold, the travelling speed of the vehicle is less than a second speed threshold, the opening degree of the accelerator pedal is less than a second opening-degree threshold, and a second requesting signal is not detected, wherein the second requesting signal is for instructing to switch the driving mode of the vehicle from the sport mode to the energy saving mode, the second electric-quantity threshold is larger than the first electric-quantity threshold, the second speed threshold is larger than the first speed threshold, and the second opening-degree threshold is larger than the first opening-degree threshold.

6. The method for switching driving modes according to claim 1, wherein the step of, according to the current operation condition, determining the target driving mode of the vehicle comprises:
when the current driving mode is an energy saving mode, if a duration for which the current operation condition maintains as a fifth operation-condition situation is larger than or equal to a third preset duration, or the current operation condition satisfies the fifth operation-condition situation and a slope of a current travelling road is larger than a first slope threshold, determining the target driving mode to be a sport mode;
wherein the fifth operation-condition situation comprises that the residual capacity is larger than or equal to a second electric-quantity threshold, the travelling speed of the vehicle is larger than or equal to a third speed threshold or the opening degree of the accelerator pedal is larger than or equal to a third opening-degree threshold, and a third requesting signal is not detected, wherein the third requesting signal is for instructing to switch the driving mode of the vehicle from the energy saving mode to a standard mode.

7. The method for switching driving modes according to claim 1, wherein the step of, according to the current operation condition, determining the target driving mode of the vehicle comprises:
when the current driving mode is an energy saving mode, if a duration for which the current operation condition maintains as a sixth operation-condition situation is larger than or equal to a fourth preset duration, or the current operation condition satisfies the sixth operation-condition situation and a slope of a current travelling road is between a second slope threshold and a first slope threshold, determining the target driving mode to be a standard mode;
wherein the sixth operation-condition situation comprises that the residual capacity is larger than or equal to a first electric-quantity threshold, the travelling speed of the vehicle is larger than or equal to a fourth speed threshold or the opening degree of the accelerator pedal is larger than or equal to a fourth opening-degree threshold, and a fourth requesting signal is not detected, wherein the fourth requesting signal is for instructing to switch the driving mode of the vehicle from the energy saving mode to a sport mode.

8. The method for switching driving modes according to claim 1, wherein the step of, according to the current operation condition, determining the target driving mode of the vehicle comprises:
when the current driving mode is a standard mode, if a duration for which the current operation condition maintains as a seventh operation-condition situation is larger than or equal to a fifth preset duration, or the current operation condition satisfies the seventh operation-condition situation and a slope of a current travelling road is larger than or equal to a third slope threshold, or the current operation condition satisfies the seventh operation-condition situation and a stroke speed of the accelerator pedal is larger than or equal to an accelerator-pedal-travel-speed threshold, determining the target driving mode to be a sport mode;
wherein the seventh operation-condition situation comprises that the residual capacity is larger than or equal to a third electric-quantity threshold, the travelling speed of the vehicle is larger than or equal to a fifth speed threshold or the opening degree of the accelerator pedal is larger than or equal to a fifth opening-degree threshold, and a fifth requesting signal is not detected, wherein the fifth requesting signal is for instructing to switch the driving mode of the vehicle from the standard mode to an energy saving mode.

9. The method for switching driving modes according to claim 1, wherein the step of, according to the current operation condition, determining the target driving mode of the vehicle comprises:
when the current driving mode is a standard mode, if the current operation condition satisfies an eighth operation-condition situation, determining the target driving mode to be an energy saving mode;
wherein the eighth operation-condition situation comprises that the residual capacity is less than a fourth electric-quantity threshold and a sixth requesting signal is not detected, wherein the sixth requesting signal is for instructing to switch the driving mode of the vehicle from the standard mode to a sport mode.

10. The method for switching driving modes according to claim 9, wherein the step of, according to the current operation condition, determining the target driving mode of the vehicle comprises:
if a duration for which the current operation condition maintains as a ninth operation-condition situation is larger than or equal to a sixth preset duration, determining the target driving mode to be the energy saving mode;
wherein the ninth operation-condition situation comprises that the residual capacity is larger than or equal to a fourth electric-quantity threshold, the travelling speed of the vehicle is less than a sixth speed threshold or the opening degree of the accelerator pedal is less than a sixth opening-degree threshold, and the sixth requesting signal is not detected, wherein the sixth requesting signal is for instructing to switch the driving mode of the vehicle from the standard mode to the sport mode.

11. The method for switching driving modes according to any one of claims 1 to 10, wherein the step of, in response to the driving-mode switching instruction inputted by the user based on the target driving mode, switching the driving mode of the vehicle to the target driving mode comprises:
based on the target driving mode, generating a driving-mode-switching requesting signal;
in response to the driving-mode-switching requesting signal, reporting a driving-mode switching request to the user; and
in response to the driving-mode switching instruction inputted by the user, switching the driving mode of the vehicle to the target driving mode.

12. An apparatus for switching driving modes, **characterised in that** the apparatus comprises:
an acquiring module configured for acquiring a current operation condition of a vehicle, wherein the current operation condition comprises the following operation-condition parameters: a current driving mode, a residual capacity of a battery, and a travelling speed of the vehicle or an opening degree of an accelerator pedal;
a determining module configured for, according to the current operation condition and operation-condition-parameter thresholds, determining a target driving mode of the vehicle, wherein the operation-condition-parameter thresholds include a residual-capacity threshold, travelling-speed thresholds and accelerator-pedal-opening-degree thresholds; and
a responding module configured for, in response to a driving-mode switching instruction inputted by a user based on the target driving mode, switching the driving mode of the vehicle to the target driving mode.

13. A vehicle, comprising an electronic device, the electronic device comprising a memory, a processor, and a computer program that is stored in the memory and executable in the processor, **characterised in that** the processor, when executing the computer program, implements the steps of the method for switching driving modes according to any one of claims 1 to 11.

14. A computer-readable storage medium, the computer-readable storage medium storing a computer program, **characterised in that** the computer program, when executed by a processor, implements the steps of the method for switching driving modes according to any one of claims 1 to 11.
